## Europäisches Patentamt
## European Patent Office
## Office européen des brevets

(19)

(11) Publication number: **0 025 299**
**B1**

(12)

# EUROPEAN PATENT SPECIFICATION

(45) Date of publication of patent specification: **04.01.84**

(51) Int. Cl.³: **B 60 G 9/02**

(21) Application number: **80302889.3**

(22) Date of filing: **20.08.80**

(54) Axle suspension.

(30) Priority: **21.08.79 GB 7929093**

(43) Date of publication of application:
**18.03.81 Bulletin 81/11**

(45) Publication of the grant of the patent:
**04.01.84 Bulletin 84/1**

(84) Designated Contracting States:
**DE FR IT NL SE**

(56) References cited:
**DE - A - 1 956 365**
**DE - C - 1 155 349**
**GB - A - 1 202 396**
**GB - A - 1 224 196**

(73) Proprietor: **Dickson-Simpson, John Marmaduke**
**19/20 Cowcross Street**
**London EC1M 6DQ (GB)**

(72) Inventor: **Dickson-Simpson, John Marmaduke**
**19/20 Cowcross Street**
**London EC1M 6DQ (GB)**

(74) Representative: **Smith, Martin Stanley et al,**
**Stevens, Hewlett & Perkins 5, Quality Court**
**Chancery Lane**
**London WC2A 1HZ (GB)**

Courier Press, Leamington Spa, England.

## Axle suspension

The present invention relates to an axle suspension which is particularly though not exclusively suitable for use with air suspension units in commercial vehicles.

It is not convenient for air suspension units to act directly onto axles as is conventional with leaf springs. A more convenient arrangement, which has been employed, is to attach the axle rigidly to trailing arms which are pivoted to the vehicle in front of the axle and which transmit axle load to air suspension units behind the axle. This arrangement on its own suffers from the drawbacks that under vehicle roll or single-side deflection conditions, when one trailing arm is inclined upwardly in comparison with normal, and the other trailing arm is inclined downwardly in comparison with normal, the axle casing is twisted and indeed acts as an anti-roll bar. This has led to cracking of axle casings and suspension members.

Patent Specification DE—C—1155349 shows an arrangement which allows slight rotation of the axle by virtue of a mounting consisting of bolts with resilient bushes. The torque-reaction characteristic of such a system is not entirely satisfactory. Patent Specification GB—A—1202396 shows a trailing arm suspension system with auxiliary leaf springs effective to supplement the main springs under bounce conditions.

The present invention seeks to provide a system which uses leaf springs to enhance the torque reaction characteristics of a suspension system of the kind described in DE—C—1155349.

According to the invention there is provided an axle suspension comprising a pair of longitudinal arms, each pivotally connectible at one end to the vehicle; a cross-beam interconnecting the other ends of the longitudinal arms; a pair of suspension units, each acting directy, or indirectly on its own longitudinal arm for transmitting axle loads to the vehicle; means for laterally locating the arms and cross-beam with respect to the vehicle; a pair of axle mounting brackets; and connection means between each axle mounting bracket and its own longitudinal arm for reacting wheel torques and permitting pivotal movement between the bracket and the axle under roll, characterised in that the connection means is a resilient connection comprising a pivotal connection and torque reaction means constituted by a leaf spring acting between the axle mounting bracket at one end and the respective longitudinal arm at the other end.

The pivotal connection of the axle brackets accommodate differing arm inclinations experienced under roll conditions without appreciably twisting the axle, whilst the torque reaction means constrains within limits rotation of the axle with respect to the arms under acceleration and more importantly braking. The leaf spring may extend forwards or backwards along its arm from the bracket to the pinning position. Alternatively the leaf spring might extend in both directions along the arm and be pinned to the arm on opposite sides of the bracket. Pivotal connection of the brackets to the arms may be plain bearings or rubber bushes—to provide enhanced noise isolation.

The arms are preferably flexibly connected to the cross-beam either by plain bearings or rubber bushes; the latter or at least resilient couplings are preferred to accommodate change in arm angularity during vehicle roll. Nevertheless in a case where increased roll stiffness is required a stiff connection may be used e.g. the cross-beam may be twin-pinned or rigidly joined to trailing arms; to cause the cross-beam to act as an anti-roll bar.

The suspension units may be steel coils or rubber units but the preferred suspension units are air suspension units. The suspension units may act directly onto longitudinal arms or onto the cross-beam, which, transfers the loads onto the arms. Preferably the units act at the ends of the cross-beam since the further they are spaced laterally in the vehicle the greater roll stiffness they provide. Air suspension units normally operate at a leverage decreasing their loading from the equivalent wheel load. In the preferred embodiment, including trailing arms, the units are conveniently positioned behind and in line with the wheels of the axle concerned. In this position they may be arranged at an adequate leverage and they may produce a suitable roll stiffness.

The means for laterally locating the axle conveniently acts through the cross-beams, though it could act directly on the axle. The location means may be a Panhard rod, though other conventional locating means might be employed such as a Watts linkage or an A-frame. Further, sliding pads acting between the trailing arms and the vehicle chassis may also be used. These may take the form of low friction pads, e.g. of nylon, carried on the arms to slide against steel plates attached to the chassis.

The axle may be either a front or a rear axle and may be either driven or dead.

To help understanding of the invention, a specific embodiment thereof will now be described with reference to the accompanying drawings in which:—

Figure 1 is a front perspective view of an axle suspension according to the invention installed on a vehicle chassis;

Figure 2 is a rear perspective view of the suspension with the chassis omitted, and

Figure 3 is a diagrammatic side view showing trailing arms in a roll condition.

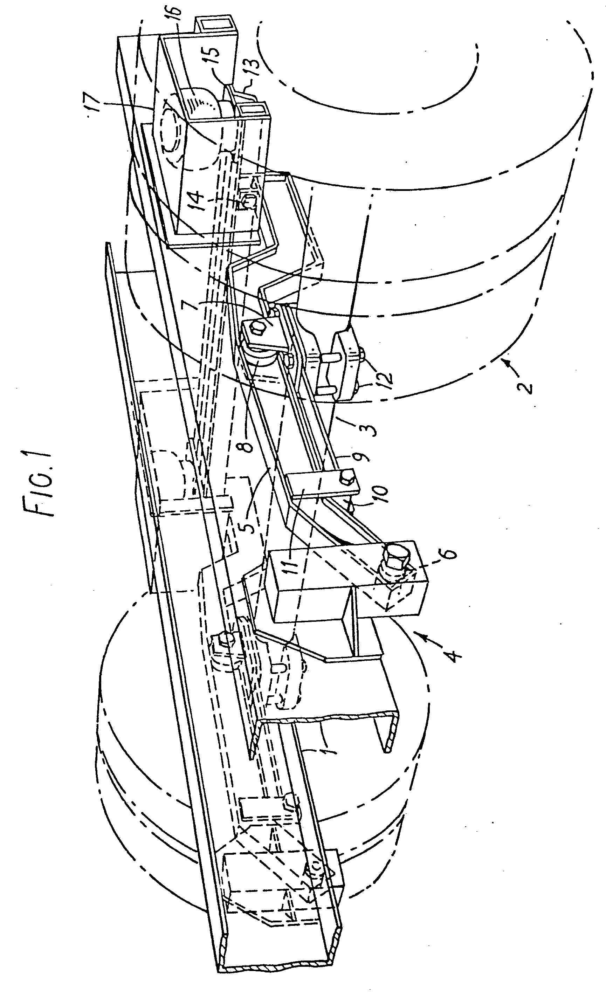

Referring first to Figure 1, there can be seen in outline a rear portion of a commercial vehicle chassis 1 having rear nearside wheels 2 on axle 3. In front of the axle, a bracket 4 is attached to the outside of the chassis for pivoting a trailing arm 5 via a cylindrical rubber bush 6, the trailing arm being disposed outboard of the chassis. A mounting bracket 7 connects the axle 3 to the trailing arm via a spherical rubber bush 8 and a pivot pin, pivotal movement being resisted by a torque-reaction quarter elliptic spring 9. The bush 8 is mounted within the arm 5 which is of fabricated construction. The spring 9 is pinned at its forward end 10 to lugs 11 on the arm and is clamped at its rear end to the bracket 7 by axle clamp bolts 12.

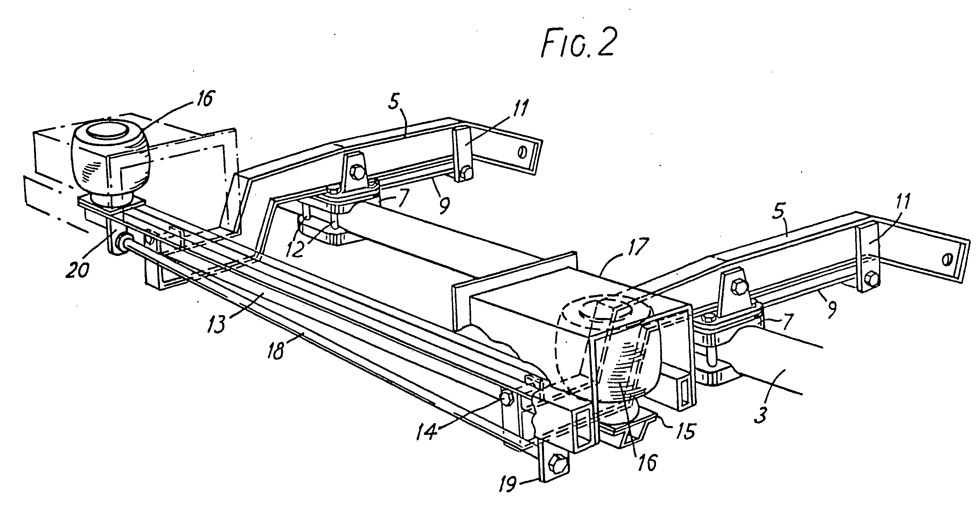

As may be appreciated from Figure 2 there are offside and nearside trailing arms 5. Since they are similar they are not separately described. A crossbeam 13 interconnects the rear ends of the trailing arms to which it is interconnected by not-shown cylindrical bushes contained within the channel of the beam on bolts 14. Outboard ends of the beam have mounting pads 15 for air suspension units 16 which are housed at their upper ends in housing 17 attached to the chassis. These units act as a mechanical advantage with respect to loads transferred from the axle via the brackets 7, the arms 5 being pivoted at the brackets 4. The units are spaced outwardly from the chassis to be in line with and behind the wheels. Thus they act to provide greater roll stiffness than they would if they acted at the rear ends of the trailing arms.

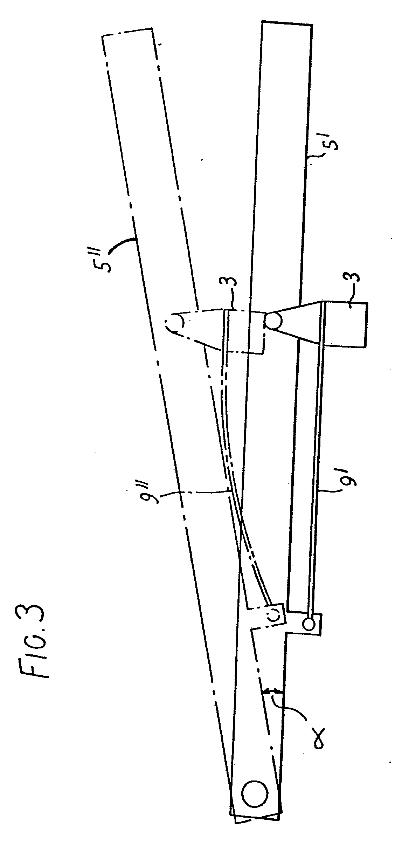

Figure 3 shows in diagrammatic form a nearside trailing arm 5′ and—in dotted lines—an offside trailing arm 5″ under a vehicle roll condition to the offside. The offside quarter elliptic spring 9″ can be seen to be arched whilst the nearside spring 9′ is flattened. The torque required for deflecting these springs is still transferred through the axle 3. However, in contrast to the above described prior arrangement, the axle is not required to twist through the angle $\alpha$ separating the arms to permit the degree of roll indicated. In effect the springs 9 are contributing to the roll stiffness of the suspension system. It is an advantage of this suspension system that its overall roll stiffness may be arranged to be the same as that of a conventional leaf spring system (which it may replace) acting at the position of the brackets 7. At the same time the air suspension units give a softer spring rate in bounce. The springs 9 do not of course deflect under vehicle bounce, but they do react to axle braking and acceleration torques.

Referring again to Figure 2 a Panhard rod 18 extends between a chassis bracket 19 in the vicinity of the offside housing 17 and a bracket 20 at the nearside end of the cross beam 13. The Panhard rod locates the axle 3 laterally in the chassis.

The invention is not intended to be restricted to the details of the above described embodiment. For instance each leaf spring may trail from its axle mounting bracket. With this arrangement, the inside one of a pair of lugs to which the rear end of the spring is pinned provides a convenient mounting point for a nylon pad which slides against a steel plate attached to the chassis. The pair of pads, one on each arm and side of the chassis, thereby locate the arms laterally of the vehicle and replace the Panhard rod.

## Claims

1. An axle suspension comprising a pair of longitudinal arms (5), each pivotally connectible at one end to the vehicle; a cross-beam (13) interconnecting the other ends of the longitudinal arms; a pair of suspension units (16), each acting directly or indirectly on its own longitudinal arm for transmitting axle loads to the vehicle; means for laterally locating the arms and cross-beam with respect to the vehicle; a pair of axle mounting brackets (7); and connection means between each axle mounting bracket and its own longitudinal arm for reacting wheel torques and permitting pivotal movement between the bracket and the axle under roll, characterised in that the connection means is a resilient connection comprising a pivotal connection (8) and torque reaction means constituted by a leaf spring (9) acting between the axle mounting bracket (7) at one end and the respective longitudinal arm (5) at the other end.

2. An axle suspension as claimed in claim 1 characterised in that the means for laterally locating the arms comprises a friction pad mounted on each arm and a steel plate attached to the chassis opposite each pad for the pad to slide against.

3. An axle suspension as claimed in claim 2 characteirsed in that the leaf spring (9) of each arm extends from the axle mounting bracket (7) away from the pivotal connection (6) of the arm (5) to the chassis and is pinned to the arm between a pair of lugs and the friction pad of the arm is mounted on the inside one of the pair of lugs.

## Revendications

1. Suspension d'essieu comprenant une paire de bras longitudinaux (5), chacun pouvant être articulé à une extrémité du véhicule; une traverse (13) reliant les autres extrémités des bras longitudinaux; une paire d'unités de suspension (16) agissant chacune directement ou indirectement sur son propre bras longitudinal pour transmettre les charges de l'essieu au véhicule; des moyens pour positionner latéralement les bras et la traverse par rapport au véhicule; une paire de consoles (7) de montage d'essieu; et un moyen de connexion entre chaque console de montage d'essieu et son propre bras longitudinal pour faire réagir les couples des roues et permettre un mouvement pivotant entre la console et l'essieu en roulis, caractérisée en ce que le moyen de connexion est une connexion flexible comprenant une connexion de pivotement (8) et un moyen de réaction du couple constitué par une ressort à lame (9) agissant entre la console de montage (7) de l'essieu à un bout et le bras longitudinal respectif (5) à l'autre bout.

2. Suspension d'essieu selon la revendication 1, caractérisée en ce que le moyen de positionnement latéral des bras comprend un tampon à frottement monté sur chaque bras et une plaque d'acier fixée au châssis en face de chaque tampon pour permettre le coulissement du tampon contre cette plaque.

3. Suspension d'essieu selon la revendication 2, caractérisée en ce que le ressort à lame (9) de chaque bras s'étend depuis la console (7) de montage de l'essieu pour s'éloigner de la connexion de pivotement (6) du bras (5) vers le châssis et est boulonné au bras entre une paire de pattes et le tampon à frottement du bras est monté sur la patte intérieure de la paire de pattes.

**Patentansprüche**

1. Achsaufhängung umfassend ein Paar von längs verlaufenden Armen (5), wobei jeder schwenkbar an einem Ende mit dem Fahrzeug verbindbar ist, einen Querträger (13), welcher die anderen Enden der längsverlaufenden Arme miteinander verbindet, ein Paar von Aufhängeeinheiten (16), wobei jede direkt oder indirekt auf ihren eigenen längsverlaufenden Arm einwirkt, um Achslasten auf das Fahrzeug zu übertragen, eine Einrichtung um die Arme und den Querträger in Bezug auf das Fahrzeug in der Querrichtung seitlich einzustellen, ein Paar von Achshalterungsklammern (7) und eine Verbindungseinrichtung zwischen jeder Achshalterungsklammer und ihrem eigenen längsverlaufenden Arm, um Radverdrehungen entgegenzuwirken und eine Schwenkbewegung zwischen der Klammer und der Achse beim Rollbetrieb zu ermöglichen, dadurch gekennzeichnet, daß die Verbindungseinrichtung eine nachgiebige Verbindung ist, umfassend eine Schwenkverbindung (8) und eine auf die Radverdrehung reagierende Einrichtung, welche von einer Blattfeder (9) gebildet wird, welche zwischen der Achshalterungsklammer (7) an einem Ende und dem entsprechenden längsverlaufenden Arm (5) an dem anderen Ende wirkt.

2. Achsaufhängung nach Anspruch 1, dadurch gekennzeichnet, daß die Einrichtung, um die Arme in Querrichtung einzustellen, ein Reibungsdämpfungsglied umfaßt, welches auf jedem Arm angebracht ist, und eine Stahlplatte umfaßt, welche am Fahrgestell gegenüber jedem Dämpfungsglied befestigt ist, so daß das Dämpfungsglied dagegengleitbar ist.

3. Achsaufhängung nach Anspruch 2, dadurch gekennzeichnet, daß die Blattfeder (9) eines jeden Armes sich ausgehend von der Achshalterungsklammer (7) weg von der Drehverbindung (6) des Armes (5) zum Fahrgestell hin erstreckt und mit dem Arm zwischen einem Paar von Ansatzlaschen verbunden ist, und daß das Reibungsdämpfungsglied des Armes an der Innenseite einer der Ansatzlaschen des Paares befestigt ist.

FIG.1

Fig.2

FIG.3

0025 299